# EUROPEAN PATENT SPECIFICATION

(11) **EP 1 923 151 B1**
(45) Date of publication and mention of the grant of the patent: **09.09.2009**
(21) Application number: 07113048.8
(22) Date of filing: 24.07.2007
(51) Int. Cl.: B21K 1/56, F16B 35/00, B23K 35/02

(54) **Method of manufacturing a bi-metal screw**
Verfahren zur Herstellung einer Bimetallschraube
Procédé de fabrication d'une vis bimétallique

(43) Date of publication of application: 21.05.2008
(73) Proprietor: Top Well Tech Corp, Road Town Tortola (VG)
(72) Inventor: Hsieh, Yi-Lin, Zuoying District Kaohsiung City 813 (TW)
(74) Representative: Chaillot, Geneviève

(56) References cited:
- EP-A- 1 180 606
- EP-A- 1 564 423
- WO-A-88/05991
- DE-A1- 2 837 996
- US-A- 5 205 466

## Description

### BACKGROUND OF THE INVENTION

### 1. Field of the Invention

The present invention relates to a method of forming a screw, in particular a method of manufacturing a bi-metal screw which facilitates to lower the interspaces within the junction of two materials while operating, and to increase the quality of the formation.

### 2. Description of the Related Art

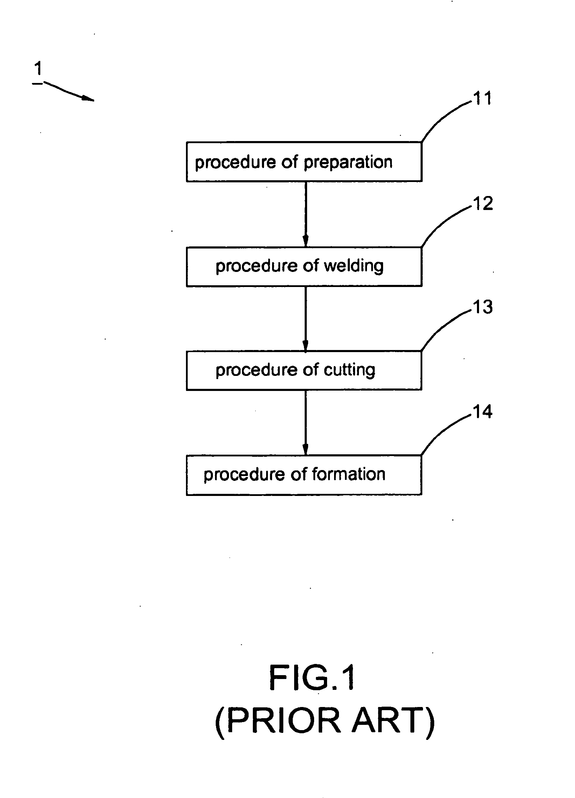

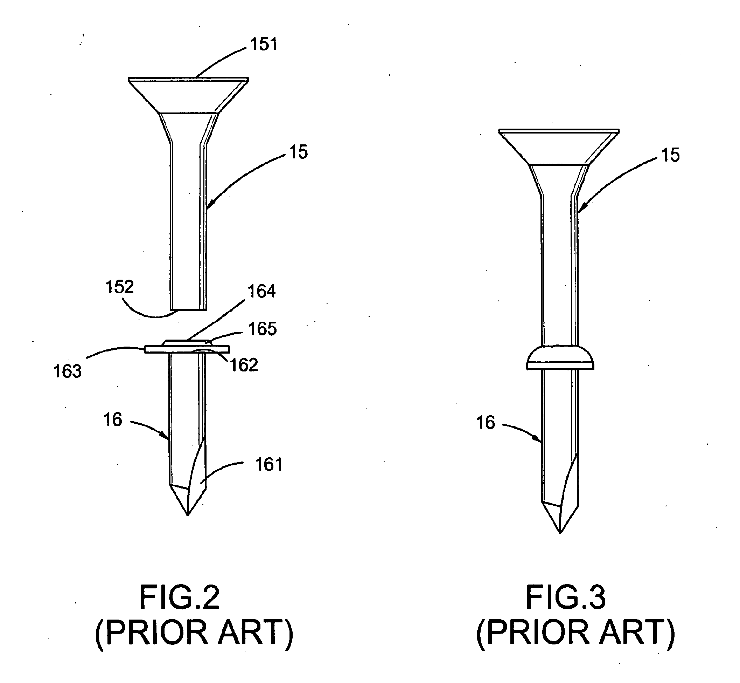

Referring to Fig. **1** and **2****,** a conventional method of manufacturing a bi-metal screw **1** comprising a sequence of procedures, which include a procedure of preparation **11,** a procedure of welding **12,** a procedure of cutting **13,** and a procedure of formation **14;** wherein, a shank portion **15** and a drilling portion **16** are arranged in the procedure of preparation **11,** which are respectively made of different materials; the shank portion **15** has a screw head **151** formed on one end thereof and a welding surface **152** disposed on the other end thereof; the drilling portion **16** has a drill tip **161** defined at the distal end thereof and an engaging face **162** opposite to the drill tip **161;** Moreover, a sheet **163** is disposed on the engaging face **162,** and further a welding lug **165** with a flat surface **164** is projected from the sheet **163,** thereby welding the welding surface **152** to the welding lug **165.**

Continuing with the aforesaid, as referring to Fig. **2** and **3****,** the shank portion **15** is brought into contact with the drilling portion **16** by compressing both the welding surface **152** and welding lug **165** together; further referring to Fig. **4****,** a composite screw **2** is thus formed. Subsequently, the scrap generated and exposed out of the junction of the two portions would be removed through the procedure of cutting **13,** further as shown in Fig. **5****,** a plurality of screw threads **21** are formed by a thread-rolling machine, thus a bi-metal screw **3** is finished.

However, the conventional method of manufacturing still has some disadvantages:

### 1. The interspaces generated within the joining of the two portions

By means of the flat surface **164** of the welding lug **165** compressed under pressure into the welding surface **152,** the shank portion **15** and the drilling portion **16** can be combined into a composite screw **2;** however, the air can not be fully smoothed away while welding, the interspaces hence is accumulated within the interface of the two portions, which affects the welding capability.

### 2. Reducing the manufacturing quality of the screw

Due to that both the welding surface **152** and the flat surface **164** are formed as a planar surface and butt welded, the shank portion **15** may not be precisely joined to the drilling portion **16,** whereas causing the composite screw 2 to be slanted aside during the welding process and influencing the quality of the formation.

EP 1564423 mainly discloses a heat resistant drill screw whose formation comprises a sequential procedure: preparation for preparing a drilling portion M1 with a projection 11 and a shank portion M2, electric welding for adjoining portions M1, M2, cold forging a drill part 4 and scraps 13 around the drill part 4, removing the scraps 13, formation for rolling threads 6, and quenching and hardening in the quenching medium 16 of the tank 15.

### SUMMARY OF THE INVENTION

The objects of the present invention are to provide a method of manufacturing a bi-metal screw which facilitates to decrease the interspaces accumulated inside the junction of the two materials while welding, and to increase the quality of the screw formation.

The method of forming a bi-metal screw in accordance with the present invention comprises in sequence a procedure of preparation, a procedure of welding, a procedure of cutting, and a procedure of formation; wherein, a shank portion and a drilling portion are arranged of different materials in the preparing process; the shank portion has a planar welding surface for connecting to a conical section of the drilling portion. By means of the conical section, the drilling portion can be gradually and precisely welded into the shank portion, so as to improve the problem of being slanted aside and decrease the interspaces generated in the junction of the two portions, thereby increasing the quality of the screw formation.

### BRIEF DESCRIPTION OF THE DRAWINGS

The advantages of the present invention over the known prior art will become more apparent to those of ordinary skilled in the art upon reading the following descriptions in junction with the accompanying drawings.
- Fig. 1: is a flow diagram for showing a conventional method of manufacturing a bi-metal screw;

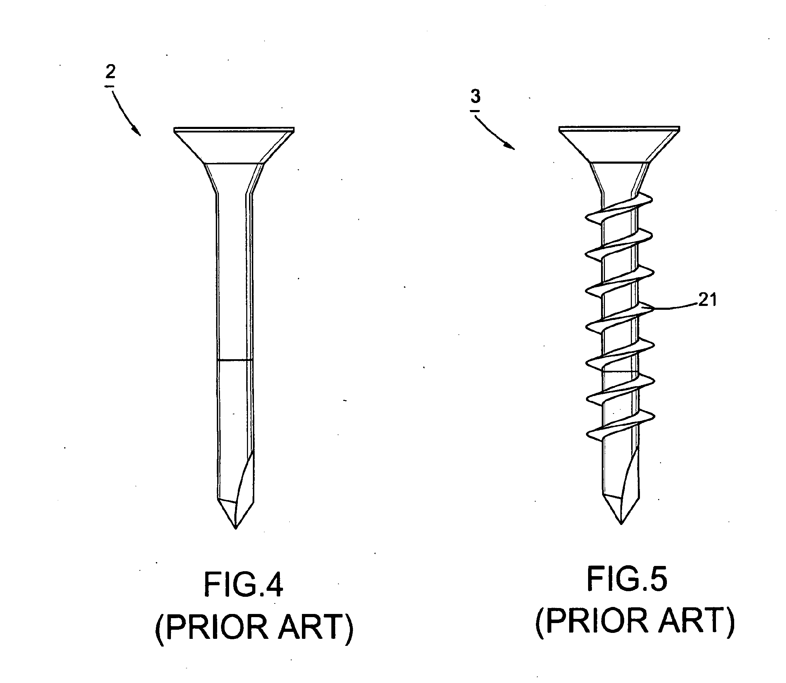

- Figs. 2-5: show how the drilling portion welds to the shank portion and show the formation of the bi-metal in the conventional method of manufacturing a bi-metal screw;

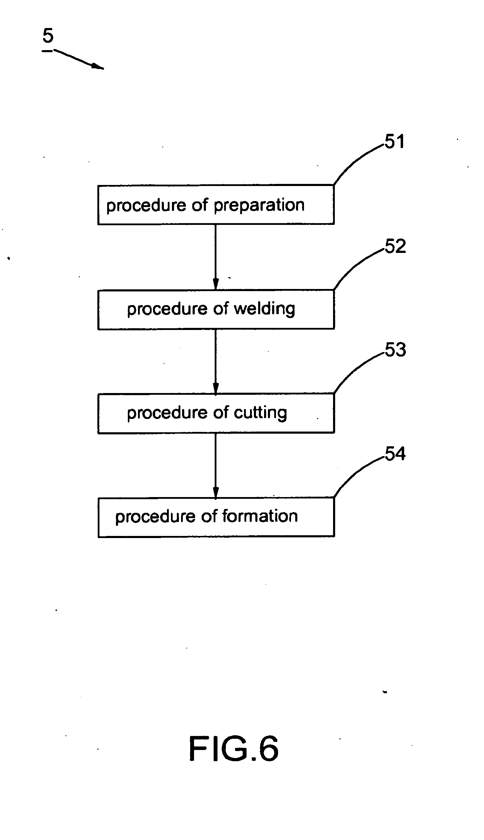

- Fig. 6: is a flow diagram for showing the first preferred embodiment of the present invention;

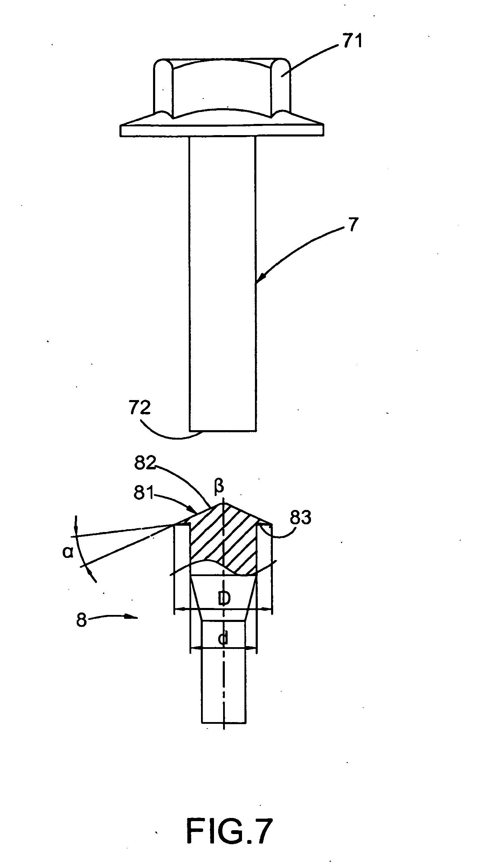

- Fig. 7: is a schematic view for showing the configurations of the shank portion and the drilling portion of the present invention;

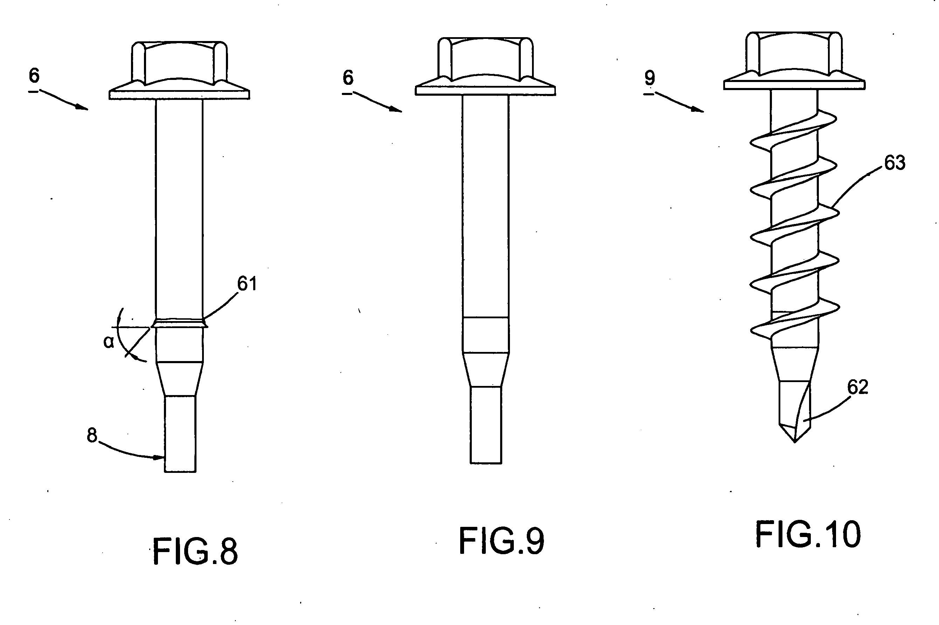

- Figs. 8-10: show how the shank portion and the drilling portion are welded together and show the formation of the bi-metal in the method of manufacturing a bi-metal screw of the present invention; and

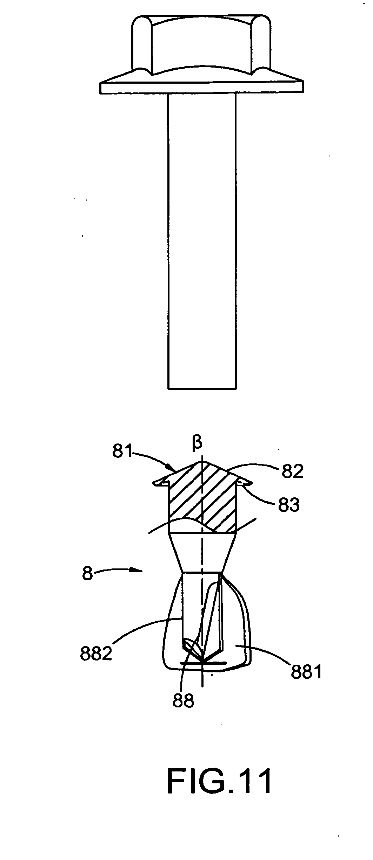

- Fig. 11: shows the method of manufacturing a bi-metal screw of the second preferred embodiment of the present invention.

### DETAILED DESCRIPTION OF THE PREFERRED EMBODIMENTS

Before the present invention is described in greater detail, it should be noted that the like elements are denoted by the same reference numerals throughout the disclosure.

Referring to Fig. **6****,** the first preferred embodiment of a method of manufacturing a bi-metal screw **5** comprises a procedure of preparation **51,** a procedure of welding **52,** a procedure of cutting **53,** and a procedure of formation **54.** Further referring to Fig. **7****,** a shank portion **7** and a drilling portion **8** are respectively formed and made of different materials in the procedure of preparation **5;**
wherein, the shank portion 7 is made of a kind of metal, for instance of a stainless steel, which comprises a screw head **71** formed on one side thereof and a planar welding surface **72** disposed on the other side thereof; furthermore, the drilling portion **8** is made of another kind of metal, for instance of a low-carbon steel, which is susceptible of carburizing-and-quenching, so as to promote the volume of the carbon up to **35%** for increasing the hardness of the outer surface of the drilling portion **8.**
wherein a central axis **"β"** is longitudinally defined from a center of the drilling portion **8,** which has a conical section **81** defined thereon. The conical section **81** consists of a conical surface **82** defined at the top face thereof and a bottom surface **83** defined opposite to the conical surface **82.** Furthermore, an outer diameter **"D"** of the conical section **81** is greater than a shank diameter **"d"** of the drilling portion **8,** and the conical surface **82** is formed in a rough state. The bottom surface **83** intersects to an outmost tip of the conical surface **82,** thereby inwardly extending toward the direction of the drilling portion **8** and engaging thereto; the bottom surface **83** can be perpendicular or inclined to the central axis **"β"** and has a sharp angle **"α"** with the conical surface **82,** which results in narrowing the tip of the conical surface **82.**

Subsequently, the procedure of welding **52** is proceeding to weld the conical section **81** of the drilling portion **8** to the planar welding surface **72** of the shank portion 7. By means of the conical surface **82** formed in a rough state, the drilling portion **8** can be precisely and gradually welded to the shank portion **7,** thereby decreasing the interspaces generated and accumulated inside the junction of the two portions. Simultaneously, the conical section **81** of the drilling portion **8** is dissolved through the heat of welding into the shank portion and is precisely adhering thereto; therefore, a composite screw **6** is formed as illustrated in Fig. **8****.**

Referring to Fig. **8** and **9****,** during the above procedure of welding **52,** a scrap **61** is generated and exposed out of the junction of the shank portion **7** and the drilling portion **8,** therefore the procedure of cutting **53** is proceeding for chipping and removing the scrap **61** out of the composite screw **6.** Due to the configuration of the sharp angle "α", the amount of the scrap **61** would decrease and facilitate to increase the cutting efficiency. Further referring to Fig. **10****,** a plurality of screw threads **63** are formed by a thread-rolling machine along the composite screw **6,** and a drill tip **62** is also molded at the distal end thereof by some relative apparatuses, whereby an integral bi-metal screw **9** is finished. Illustrations of the above apparatuses are accordingly omitted. Substantively, for practical purpose, the bi-metal screw **9** can be adjusted again through the relative processes of the heat treatment based on the client's requirement. Let the bi-metal screw **9** to meet the actual use demand.

Referring to Fig. **11****,** the second preferred embodiment of the present invention comprising the same elements as described in the first preferred embodiment. Particularly, the drill tip **88** of the drilling portion **8** is formed in the preliminary procedure of preparation **51,** and a scrap stock **881** is disposed around the outer circumference of said drill tip **88,** thereby preventing from abrading the sharpness of a cutting edge **882** of the drill tip **88** while welding. The scrap stock **881** would be removed until the last procedure of formation. In this manner, the cutting capability of the drill tip **8** would hence be increased.

To sum up, the present invention takes advantage of configuration of the shank portion and the drilling portion. Particularly, the shank portion has a planar welding surface defined thereon, and a conical section is disposed on the drilling portion. By compressing the planar welding surface and the conical section together, the conical section can be gradually dissolved through the heat of welding into the shank portion, so as to decrease the interspaces accumulated in the junction of the two portions, improve the problem of being slanted aside, and increase the quality of the screw formation.

While we have shown and described the embodiment in accordance with the present invention, it should be clear to those skilled in the art that further embodiments may be made without departing from the scope of the present invention as defined in the appended claims.

## Claims

1. A method (5) of manufacturing a bi-metal screw comprising:
- a step of preparation (51) for arranging a shank portion (7) and a drilling portion (8), which are respectively made of different materials; said shank portion comprising a screw head (71) disposed on one end thereof and a planar welding surface (72) formed on the other end thereof; said drilling portion (8) having a conical section (81) disposed on one end thereof and a central axis " β " longitudinally defiled from a center of said drilling portion (8), said conical section (81) including a conical surface (82) defined at the top face thereof and a bottom surface (83) defined opposite to said conical surface (82);
- a step of welding (52) for welding said shank portion (7) to said drilling portion (8) to thereby form a composite screw (6) by welding;
- a step of formation (54) for molding a drill tip (62) at the distal end of said drilling portion (8) and continuously rolling a plurality of screw threads (63) on said composite screw (6), hence a bi-metal screw (9) is accomplished;
**characterized in that** said conical section (81) has an outer diameter "D" greater than a shank diameter "d" of said drilling portion (8), said bottom surface (83) intersecting an outmost tip of said conical surface (82), thereby inwardly extending toward the direction of said drilling portion (8) and engaging thereto; and **in that** a step of cutting (53) to chip a scrap (61) generated out of the junction of said shank portion (7) and said drilling portion (8) is foreseen between the step of welding and the step of formation.

2. A method (5) of manufacturing a bi-metal screw as claimed in claim 1, **characterised in that**:
- in said step of preparation (51), a drill tip (88) is initially formed at a distal end of said drilling portion (8), which is opposite to said conical section (81), with a scrap stock (881) disposed around the outer circumference of said drill tip (88), and
- said step of formation (54) comprises continuously rolling said plurality of screw threads (63) on said composite screw (6) and further removing said scrap stock (881), hence a bi-metal screw (9) is accomplished.

3. A method (5) of manufacturing a bi-metal screw as claimed in claim 1, **characterised in that** said bottom surface (83) is inclined to said central axis " β " and has a sharp angle "α" with said conical surface (82).

4. A method (5) of manufacturing a bi-metal screw as claimed in claim 1, **characterised in that** said conical surface (82) is formed in a rough state.

## Patentansprüche

1. Verfahren (5) zur Herstellung einer Bimetallschraube, die folgendes umfasst:
- einen Vorbereitungsschritt (51) zur Anordnung eines Schaftabschnitts (7) und eines Bohrabschnitts (8), die jeweils aus verschiedenen Stoffen gemacht sind; wobei der Schaftabschnitt einen an seinem einen Ende angeordneten Schraubenkopf (71) und eine an seinem anderen Ende ausgebildete planare Schweißfläche (72) umfasst; wobei der Bohrabschnitt (8) einen an seinem einen Ende angeordneten konischen Abschnitt (81) und eine Mittelachse "β " aufweist, die in Längsrichtung von einer Mitte des Bohrabschnitts (8) aus definiert ist, der konische Abschnitt (81) eine an seiner oberen Stirnfläche definierte konische Fläche (82) und eine gegenüber der konischen Fläche (82) definierte untere Fläche (83) beinhaltet;
- einen Schweißschritt (52) zum Anschweißen des Schaftabschnitts (7) an den Bohrabschnitt (8), um so durch Schweißen eine zusammengesetzte Schraube (6) zu formen;
- einen Formgebungsschritt (54) zum Ausformen einer Bohrspitze (62) am Distalende des Bohrabschnitts (8) und zum fortlaufenden Walzen einer Mehrzahl von Schraubengewinden (63) an der zusammengesetzten Schraube (6), wodurch eine Bimetallschraube (9) vollendet wird;
**dadurch gekennzeichnet, dass**
der konische Abschnitt (81) einen Aussendurchmesser "D" hat, der größer ist als der Schaftdurchmesser "d" des Bohrabschnitts (8), die untere Fläche (83) eine äußere Spitze der konischen Fläche (82) schneidet, sich **dadurch** einwärts in Richtung des Bohrabschnitts (8) erstreckt und darin eingreift; und **dadurch**, dass ein Schneideschritt (53) zum Abspanen eines durch das Zusammenfügen des Schaftabschnitts (7) und des Bohrabschnitts (8) entstandenen Überschusses (61) zwischen dem Schweißschritt und dem Formgebungsschritt vorgesehen ist.

2. Verfahren (5) zur Herstellung einer Bimetallschraube gemäß Anspruch 1,
**dadurch gekennzeichnet, dass**
- im Vorbereitungsschritt (51) an einem Distalende des Bohrabschnitts (8), das dem konischen Abschnitt (81) gegenüber liegt, zunächst eine Bohrspitze (88) geformt wird, bei der ein Materialüberschuss (881) um den äußeren Umfang der Bohrspitze (88) angeordnet ist; und
- der Formgebungsschritt (54) das fortlaufende Walzen einer Mehrzahl von Schraubengewinden (63) auf der zusammengesetzten Schraube (6) und im Weiteren die Entfernung des Materialüberschusses (881) umfasst, wodurch eine Bimetallschraube (9) vollendet wird.

3. Verfahren (5) zur Herstellung einer Bimetallschraube gemäß Anspruch 1,
**dadurch gekennzeichnet, dass**
die untere Fläche (83) zur Mittelachse "β " geneigt ist und einen spitzen Winkel " α " mit der konischen Fläche (82) aufweist.

4. Verfahren (5) zur Herstellung einer Bimetallschraube gemäß Anspruch 1,
**dadurch gekennzeichnet, dass**
die konische Fläche (82) als rauhe Oberfläche geformt wird.

## Revendications

1. Procédé (5) de fabrication d'une vis bimétallique comprenant :
- une étape de préparation (51) pour agencer une partie de tige (7) et une partie de forage (8), qui sont respectivement constituées de différents matériaux ; ladite partie de tige comprenant une tête de vis (71) disposée sur une extrémité de celle-ci et une surface de soudage plane (72) formée sur l'autre extrémité de celle-ci ; ladite partie de forage (8) ayant une section conique (81) disposée sur une extrémité de celle-ci et un axe central « β » défini longitudinalement à partir d'un centre de ladite partie de forage (8), ladite section conique (81) comprenant une surface conique (82) définie sur la face supérieure de celle-ci et une surface inférieure (83) définie à l'opposé de ladite surface conique (82) ;
- une étape de soudage (52) pour souder ladite partie de tige (7) sur ladite partie de forage (8) pour ainsi former une vis composite (6) par soudage ;
- une étape de formation (54) pour mouler une pointe de foret (62) sur l'extrémité distale de ladite partie de forage (8) et laminer de façon continue une pluralité de filets (63) sur ladite vis composite (6), ce qui permet d'obtenir une vis bimétallique (9) ;
**caractérisé par le fait que** ladite section conique (81) a un diamètre externe « D » supérieur à un diamètre de tige « d » de ladite partie de forage (8), ladite surface inférieure (83) croisant une pointe la plus à l'extérieur de ladite surface conique (82), s'étendant ainsi vers l'intérieur en direction de ladite partie de forage (8) et s'engageant avec celle-ci ; et **par le fait qu'**une étape de coupe (53) pour couper une chute (61) générée par la jonction de ladite partie de tige (7) et de ladite partie de forage (8) est prévue entre l'étape de soudage et l'étape de formation.

2. Procédé (5) de fabrication d'une vis bimétallique selon la revendication 1, **caractérisé par le fait que** :
- dans ladite étape de préparation (51), une pointe de foret (88) est initialement formée sur une extrémité distale de ladite partie de forage (8), qui est opposée à ladite partie conique (81), avec une réserve de chute (881) disposée autour de la circonférence externe de ladite pointe de foret (88) ; et
- ladite étape de formation (54) comprend un laminage continu de ladite pluralité de filets (63) sur ladite vis composite (6) et également le retrait de ladite réserve de chute (881), ce qui permet d'obtenir une vis bimétallique (9).

3. Procédé (5) de fabrication d'une vis bimétallique selon la revendication 1, **caractérisé par le fait que** ladite surface inférieure (83) est inclinée par rapport à l'axe central « β » et forme un angle aigu « α » avec ladite surface conique (82).

4. Procédé (5) de fabrication d'une vis bimétallique selon la revendication 1, **caractérisé par le fait que** ladite surface conique (82) est formée dans un état rugueux.
